# DEMANDE DE BREVET EUROPEEN

(11) **EP 4 210 235 A1**
(43) Date de publication de la demande: **12.07.2023**
(21) Numéro de dépôt: 22216310.7
(22) Date de dépôt: 23.12.2022
(51) Int. Cl.: H04B 5/00, G06F 8/654

(54) **SYSTÈME AVEC LECTEUR, TRANSPONDEUR ET CAPTEURS ET PROCÉDÉ DE FONCTIONNEMENT**

(30) Priorité: 07.01.2022 FR 2200105
(71) Demandeur: STMicroelectronics (Rousset) SAS, 13790 Rousset (FR)
(72) Inventeur: MANGIONE, Jose, 06250 MOUGINS (FR)
(74) Mandataire: Casalonga

(57) **Abrégé**

Le système comprend un transpondeur sans contact (TG) comportant un moyen d'alimentation autonome (ALM) et un dispositif de mémoire non volatile (DM), un appareil (APP) externe au transpondeur et au moins un module (CPTi) externe au transpondeur et couplé au transpondeur. Dans un premier mode de fonctionnement l'appareil (APP) est configuré pour transmettre au transpondeur selon un protocole de communication sans contact, des informations de commandes module associées audit au moins un module et des informations de données module relatives à des données à écrire ou à lire dans ledit module ; Le transpondeur (TG) est configuré pour stocker ces informations de commande module et ces informations de données module dans une première zone (ZM1) du dispositif de mémoire non volatile (DM) et pour en réponse à un signal d'activation, communiquer de façon autonome selon un premier protocole de communication avec ledit au moins un module (CPTi) en utilisant ces informations de commandes module et ces informations de données module.

## Description

Des modes de mise en oeuvre et de réalisation de l'invention concernent les objets connectés (IoT : « Internet of Things »), notamment les capteurs, en particulier ceux nécessitant une collecte périodique de leurs données mesurées, par exemple ceux utilisés dans le milieu médical pour mesurer périodiquement la température d'un produit médical, ainsi que les transpondeurs sans contact, notamment des transpondeurs NFC (« Near Field Communication »), par exemple des étiquettes (tags) et en particulier l'utilisation de tels transpondeurs pour un dialogue avec au moins un capteur couplé au transpondeur par une liaison filaire, par exemple un bus I²C ou SPI.

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des étiquettes, et des lecteurs.

La technologie NFC est particulièrement adaptée pour connecter tout type de dispositif utilisateur et permet des communications rapides et faciles.

Un transpondeur sans contact est un transpondeur capable d'échanger des informations via une antenne avec un lecteur sans contact, selon un protocole de communication sans contact.

Un transpondeur NFC, qui est un transpondeur sans contact, est un transpondeur compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

La technologie sans contact peut aussi être utilisée dans les transpondeurs RFID (Radio Frequency IDentification) compatibles avec les normes ISO 15693 et ISO 18000-3.

Lors d'une transmission d'information entre un lecteur et un transpondeur, le lecteur génère un champ magnétique par l'intermédiaire de son antenne qui est généralement dans les normes classiquement utilisées, une onde sinusoïdale (la porteuse) à 13,56MHz.

Pour transmettre des informations depuis le lecteur vers le transpondeur, le lecteur utilise une modulation d'amplitude de ladite porteuse.

Le transpondeur quant à lui comporte des moyens configurés pour démoduler la porteuse reçue afin d'obtenir les données transmises depuis le lecteur.

Pour une transmission d'informations du transpondeur vers le lecteur, le lecteur génère le champ magnétique (la porteuse) sans modulation. L'antenne du transpondeur module alors le champ généré par le lecteur, en fonction des informations à transmettre. La fréquence de cette modulation correspond à une sous-porteuse de ladite porteuse. La fréquence de cette sous porteuse dépend du protocole de communication utilisé et peut être par exemple égale à 848 kHz.

Cette modulation est effectuée en modifiant la charge connectée aux bornes de l'antenne du transpondeur.

Deux modes de fonctionnement sont alors possibles, un mode passif ou un mode actif.

Dans le mode passif, le transpondeur rétro-module l'onde issue du lecteur pour transmettre des informations et n'intègre pas, pour la transmission des informations, de moyens d'émission proprement dits, ou émetteur, capable par exemple de générer son propre champ magnétique lors de l'émission. Un tel transpondeur dépourvu d'émetteur est appelé transpondeur passif, par opposition à un transpondeur actif qui comporte un émetteur.

Généralement un transpondeur passif est dépourvu d'alimentation car il utilise l'onde issue du lecteur pour alimenter son circuit intégré.

Dans certaines applications le transpondeur passif peut incorporer une alimentation, par exemple une pile.

Dans le mode de fonctionnement actif, le lecteur et le transpondeur dit actif génèrent tous les deux un champ électromagnétique. Généralement, ce mode de fonctionnement est utilisé lorsque le transpondeur actif est pourvu d'une source d'alimentation propre, par exemple une batterie.

Chacun des dispositifs NFC (lecteur et transpondeur) transmet les données en utilisant un schéma de modulation.

Là encore, la modulation se traduit par une modification de charge et l'on parle alors d'une communication par modulation active de charge.

Par rapport à un mode de communication passif, on obtient des distances de fonctionnement plus importantes qui peuvent aller jusqu'à 20 cm en fonction du protocole utilisé. En augmentant la taille de l'antenne du lecteur, et/ou la sensibilité du lecteur, il est alors possible d'augmenter la distance jusqu'à des distances pouvant aller jusqu'à plusieurs dizaines de cm, par exemple 60cm.

Par ailleurs, l'utilisation d'une modulation active de charge permet d'utiliser des antennes très petites.

La présente invention s'applique aussi bien à des transpondeurs passifs qu'à des transpondeurs actifs.

Actuellement il existe un besoin d'offrir une solution peu consommatrice d'énergie permettant à un moindre coût de, notamment, configurer un capteur, en particulier un capteur nécessitant une collecte périodique de leurs données mesurées, et de pouvoir stocker et récupérer ultérieurement les données acquises, par exemple périodiquement, par le capteur.

Selon un aspect il est proposé un système comprenant -un transpondeur sans contact comportant un dispositif de mémoire non volatile, par exemple une mémoire EEPROM,
- un appareil externe au transpondeur, par exemple un téléphone intelligent du type « smartphone » comportant un lecteur sans contact, _un moyen d'alimentation autonome, par exemple une batterie, configuré pour alimenter le transpondeur, et
- au moins un module externe au transpondeur, par exemple un capteur, et couplé au transpondeur, par exemple par une liaison « filaire », tel qu'un bus du type I²C ou SPI.

Le système possède un premier mode de fonctionnement dans lequel
- l'appareil est configuré pour transmettre au transpondeur selon un protocole de communication sans contact, des informations de commandes module associées audit au moins un module, et des informations de données module relatives à des données à écrire ou à lire dans ledit module, par exemple des informations permettant de créer des commandes d'écriture ou de lecture I²C ou SPI, contenant notamment un identifiant du module, un nombre d'octets à lire ou à écrire, les données proprement dites à écrire, des informations de contrôle, etc...,
- le transpondeur est configuré pour stocker ces informations de commande module et ces informations de données module dans une première zone du dispositif de mémoire non volatile et pour, en réponse à un signal d'activation, communiquer de façon autonome selon un premier protocole de communication, par exemple un protocole du type I²C avec ledit au moins un module en utilisant ces informations de commandes module et ces informations de données module.

Selon un mode de réalisation, l'appareil est configuré pour délivrer au transpondeur des données à écrire dans ledit au moins un module en utilisant le protocole de communication sans contact, le transpondeur est configuré pour stocker ces données dans une première sous-zone de la première zone mémoire du dispositif de mémoire non volatile et les informations de commandes module comportent des informations de commandes d'écriture de ces données dans ledit au moins un module.

Selon un mode de réalisation, les informations de commandes module comportent des informations de commandes de lecture de données dans ledit au moins un module, et le transpondeur est configuré pour stocker les données lues dans une deuxième sous-zone de la première zone du dispositif de mémoire non volatile, et pour communiquer ces données lues à l'appareil externe en utilisant le protocole de communication sans contact.

Ledit au moins un module est par exemple couplé au transpondeur par un bus supportant le premier protocole de communication qui est par exemple un protocole de communication série.

Le transpondeur peut être configuré pour communiquer avec plusieurs modules qui lui sont couplés et chaque information de commande module associée à un module comporte un identifiant de ce module, par exemple l'adresse du module sur le bus I²C.

Selon un mode de réalisation :
- le transpondeur comprend une première interface configurée pour communiquer avec ledit au moins un module selon le premier protocole de communication,
- une deuxième interface configurée pour communiquer avec l'appareil externe selon le protocole de communication sans contact,
- l'appareil est configuré pour délivrer à la deuxième interface des commandes initiales conformes au protocole de communication sans contact, par exemple des commandes conformes à un protocole NFC et contenant, par exemple dans le champ de « données utiles » (« payload ») lesdites informations de commandes module et lesdites informations de données module,
- la deuxième interface du transpondeur est configurée, par exemple par le biais d'un contrôleur NFC, pour extraire lesdites informations de commandes module et lesdites informations de données module des commandes initiales et les délivrer au dispositif de mémoire en vue de leur stockage, et
- le transpondeur comprend des moyens de traitement, par exemple une machine d'état, configurés pour, de façon autonome et en réponse au signal d'activation, extraire lesdites informations de commande module et lesdites informations de données module du dispositif de mémoire et former pour chaque module, une commande module et la délivrer à la première interface, la première interface étant configurée, par exemple par l'intermédiaire d'un contrôleur I²C, pour élaborer à partir de la commande module, une commande finale module conforme au premier protocole de communication, par exemple le protocole I²C, et pour la délivrer audit module.

Le signal d'activation est avantageusement délivré au transpondeur par l'appareil.

Ainsi d'une façon générale, selon cet aspect, la mémoire non volatile du transpondeur est utilisée pour stocker des commandes que le transpondeur va pouvoir exécuter de façon autonome en étant alimenté par sa propre batterie, de façon à ce qu'elles soient transmises au(x) module(s) à travers une interface filaire, par exemple une interface I²C ou SPI, selon un format compatible avec le protocole série utilisé.

En réponse au signal d'activation, par exemple une commande spécifique émise par l'appareil, par exemple le téléphone équipé d'un module NFC, la machine d'état du transpondeur exécute de façon autonome le microprogramme formé par les commandes stockées dans la mémoire non volatile et les transforme en commandes de lecture ou d'écriture de données dans le ou les capteur(s).

Le mode opératoire avec un capteur peut être divisé en plusieurs phases (programmation et/ou modification de la programmation de la machine d'états de façon simple et à tout moment par l'envoi de commandes par le lecteur, déclenchement de la machine d'états, extraction de données de la mémoire non volatile, collecte des données provenant du ou des capteurs, stockage des données collectées dans la mémoire non volatile) qui peuvent être optimisées en fonction des applications.

Une fois que la machine d'état du transpondeur a été déclenchée, le transpondeur fonctionne de façon autonome, sans que la présence du lecteur soit nécessaire.

L'appareil (ou lecteur) peut récupérer les données collectées ultérieurement à tout moment.

Ceci se distingue nettement des solutions de l'art antérieur qui prévoient aussi un dialogue entre un transpondeur et un capteur.

En effet selon une première solution de l'art antérieur, le transpondeur agit simplement comme un tunnel, c'est-à-dire qu'il reçoit à un instant donné une commande d'un lecteur sans contact, la transforme en une commande I²C par exemple, et l'envoi au capteur connecté au transpondeur. En d'autres termes le lecteur à le contrôle total des opérations effectuées par le capteur. Ceci implique que le lecteur soit en permanence présent pour que le capteur fonctionne ce qui est impossible pour des capteurs mettant en oeuvre des mesures périodiques pour des applications ou le lecteur ne peut être en permanence à proximité du transpondeur.

Selon une deuxième solution de l'art antérieur, le transpondeur coopère avec un microcontrôleur qui coopère avec le capteur sans la présence du lecteur. Mais ce microcontrôleur, qui est le maître sur le bus I²C, est un composant distinct du transpondeur ayant sa propre mémoire pour stocker son programme (« firmware »). D'une part une telle solution n'est pas optimisée en termes de coût et de consommation et d'autre part il est difficile de changer le firmware du microcontrôleur tout au long de la vie du produit, ce qui est un problème en particulier pour l'utilisation avec des capteurs très simples.

Selon un autre mode de réalisation du système selon cet aspect de l'invention, le système peut posséder un deuxième mode de fonctionnement dans lequel l'appareil et le transpondeur sont configurés pour permettre une communication directe entre l'appareil et ledit au moins un module via une communication directe entre la première interface et la deuxième interface du transpondeur.

En d'autres termes, dans ce second mode de fonctionnement, le transpondeur se comporte comme un simple passage entre le lecteur et le capteur.

Les deux modes de fonctionnement peuvent être sélectionnés par exemple par un signal de sélection émis par l'appareil.

Le transpondeur, avec ces deux modes de fonctionnement possibles, devient alors compatible avec des applications dans lesquelles il est préférable d'opter pour le deuxième mode de fonctionnement.

Le moyen d'alimentation du système peut être rechargeable et le transpondeur peut comporter alors des moyens de récupération d'énergie (« energy harvesting ») activables par l'appareil et configurés pour recharger le moyen d'alimentation rechargeable.

Selon un mode de réalisation, le système peut comprendre un objet, par exemple du type objet connecté, incorporant le transpondeur, le moyen d'alimentation autonome, et éventuellement au moins un module.

Selon un autre aspect il est proposé un transpondeur sans contact appartenant au système tel que défini ci-avant.

Selon un autre aspect il est proposé un procédé de communication entre un transpondeur sans contact, un appareil externe au transpondeur et au moins un module externe au transpondeur et couplé au transpondeur, comprenant un premier mode de fonctionnement dans lequel
- l'appareil transmet au transpondeur selon un protocole de communication sans contact, des informations de commandes module associées audit au moins un module et des informations de données module relatives à des données à écrire ou à lire dans ledit module,
- le transpondeur stocke ces informations de commande module et ces informations de données module dans une première zone d'un dispositif de mémoire non volatile et en réponse à un signal d'activation, communique de façon autonome selon un premier protocole de communication avec ledit au moins un module en utilisant ces informations de commandes module et ces informations de données module.

Selon un mode de mise en oeuvre, l'appareil délivre au transpondeur des données à écrire dans ledit au moins un module en utilisant le protocole de communication sans contact, le transpondeur stocke ces données dans une première sous-zone de la première zone mémoire du dispositif de mémoire non volatile et les informations de commandes module comportent des informations de commandes d'écriture de ces données dans ledit au moins un module.

Selon un mode de mise en oeuvre, les informations de commandes module comportent des informations de commandes de lecture de données dans ledit au moins un module, et le transpondeur stocke les données lues dans une deuxième sous-zone de la première zone du dispositif de mémoire non volatile, et communique ces données lues à l'appareil externe en utilisant le protocole de communication sans contact.

Selon un mode de mise en oeuvre, ledit au moins un module est couplé au transpondeur par un bus supportant le premier protocole de communication qui est un protocole de communication série.

Selon un mode de mise en oeuvre, le transpondeur communique avec plusieurs modules qui lui sont couplés et chaque information de commande module associée à un module comporte un identifiant de ce module.

Le procédé peut posséder un deuxième mode de fonctionnement dans lequel l'appareil communique directement avec ledit au moins un module en utilisant le transpondeur comme passerelle de transfert de commandes émises par l'appareil et destinées audit au moins un module et comme passerelle de transfert de données lues dans ledit au moins un module et destinées à l'appareil.

L'appareil peut délivrer le signal d'activation au transpondeur.

D'autres avantages et caractéristiques de l'invention apparaîtront à l'examen de la description détaillée de modes de mise en oeuvre et de réalisation, nullement limitatifs, et des dessins annexés sur lesquels :
[Fig 1]
[Fig 2]
[Fig 3]
[Fig 4]
[Fig 5]
[Fig 6]
[Fig 7]
[Fig 7A]
[Fig 8]
[Fig 9]
[Fig 10]
[Fig 11]
[Fig 12]
[Fig 13]
[Fig 14]
[Fig 15]
[Fig 16]
[Fig 17], et
[Fig 18] illustrent schématiquement des modes de réalisation et de mise en oeuvre de l'invention.

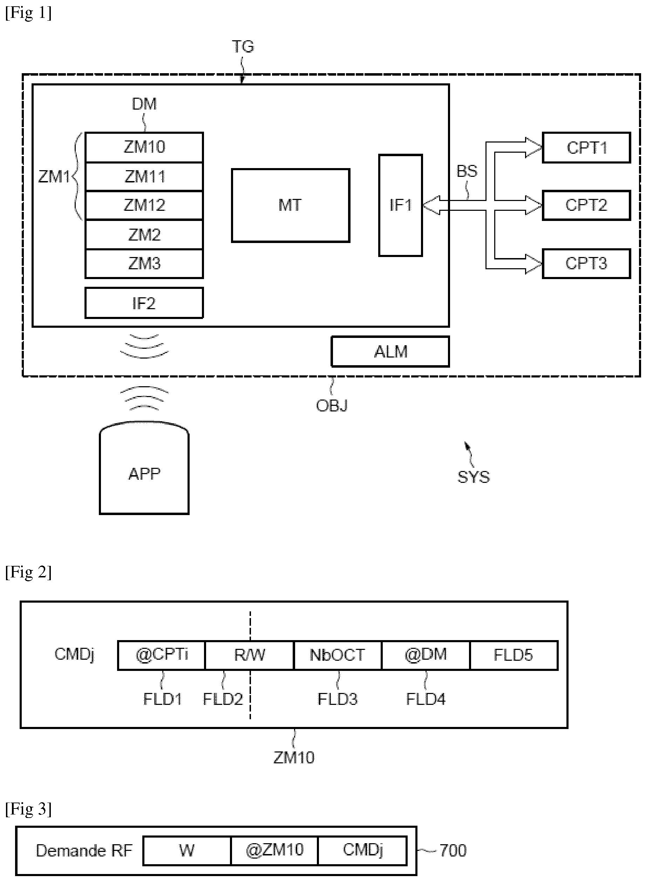

Comme illustré sur la figure 1, un système SYS comprend un transpondeur sans contact, ou étiquette, TG comportant un dispositif de mémoire non volatile DM, par exemple une mémoire EEPROM.

Le système comprend également un moyen d'alimentation autonome ALM, par exemple une batterie, configuré pour alimenter le transpondeur.

Ce moyen d'alimentation ALM pourrait être intégré au sein du transpondeur, mais généralement il est situé à l'extérieur du transpondeur TG.

Le transpondeur TG et le moyen d'alimentation ALM sont ici incorporés dans un objet OBJ, par exemple un objet connecté.

Le système SYS comprend également un appareil APP externe au transpondeur TG.

Cet appareil peut être un lecteur sans contact connu en soi ou bien un téléphone mobile du type « smartphone » émulé en mode lecteur, également connu en soi.

Le système comprend également au moins un module CPTi, externe au transpondeur TG et couplé au transpondeur.

Le module peut être un capteur, par exemple mais non limitativement un capteur de température.

Le ou les capteurs peuvent être incorporés à l'objet OBJ ou bien situés, pour l'un au moins d'entre eux, à l'extérieur de l'objet.

Dans l'exemple décrit ici, le système SYS comprend plusieurs capteurs, par exemple trois capteurs CPT1-CPT3.

Ces capteurs sont ici couplés au transpondeur TG par un bus série BS et via une première interface IF1, ici une interface série, de structure classique et connue en soi et comportant en particulier un contrôleur série.

Ce bus est par exemple ici un bus supportant le protocole I²C bien connu de l'homme du métier. Il pourrait être aussi par exemple un bus supportant le protocole SPI ou bien le protocole I³C, également bien connus de l'homme du métier.

Comme on le verra plus en détails ci-après, le système SYS possède un premier mode de fonctionnement dans lequel l'appareil APP est configuré pour transmettre au transpondeur TG selon un protocole de communication sans contact, par exemple un protocole NFC à une fréquence radiofréquence (RF) de 13,56MHz, et via une deuxième interface sans contact IF2, de structure classique et connue en soi et comportant en particulier un contrôleur NFC, des informations de commandes module associées à au moins un module, ou bien à plusieurs modules, et des informations de données module relatives à des données à écrire ou à lire dans le ou les modules concernés.

Dans ce premier mode de fonctionnement le transpondeur TG est configuré pour stocker ces informations de commande module et ces informations de données module dans une première zone ZM1 du dispositif de mémoire non volatile DM.

Plus précisément, la première zone mémoire ZM1, comporte une sous-zone ZM10 destinée à stocker les informations de commande module.

Par exemple ces informations de commande module comporte un jeu de commandes CMDj (figure 2), formant un microprogramme à exécuter.

Chaque commande CMDj comporte par exemple
- un champ FLD1 contenant l'adresse @CPTi du module ou capteur CPTi concerné par cette commande,
- un champ FLD2 contenant un bit R/W précisant si la commande est une commande d'écriture ou une commande de lecture,
- un champ FLD3 contenant une indication NbOCT indiquant un nombre d'octets à lire ou à écrire dans le capteur concerné,
- un champ FLD4 contenant une adresse @DM d'une donnée à lire ou à écrire dans la mémoire DM, et
- un ou plusieurs autres champs FLD5 pouvant contenir d'autres indications, comme par exemple un nombre d'itérations d'exécutions à effectuer pour la commande CMDi, une durée, etc....

Lorsque l'appareil APP délivre au transpondeur TG des données à écrire dans un module ou des modules CPTi en utilisant le protocole de communication sans contact, le transpondeur TG est configuré pour stocker ces données dans une première sous-zone ZM11 de la première zone mémoire ZM1 du dispositif de mémoire non volatile DM et les informations de commandes module comportent alors des informations de commandes d'écriture de ces données dans le ou les modules concernés.

Lorsque les informations de commandes module comportent des informations de commandes de lecture de données dans un ou des modules, et le transpondeur TG est configuré pour stocker les données lues dans le ou les modules concernés dans une deuxième sous-zone ZM12 de la première zone ZM1 du dispositif de mémoire non volatile, et pour communiquer ces données lues à l'appareil externe APP en utilisant le protocole de communication sans contact.

Le dispositif de mémoire DM comporte également une deuxième zone mémoire ZM2 destinées à stocker d'autres données, par exemple d'autres données NFC relatives à d'autres applications.

Le dispositif de mémoire DM comporte également une troisième zone mémoire ZM3 destinée à stocker des données de configuration du transpondeur.

Les commandes CMDj sont par exemple transmises dans les données utiles (« payload ») d'une commande RF 700 (figure 3) envoyée par l'appareil APP.

La commande RF 700 a une structure classique, compatible avec le protocole RF utilisé. Cette commande 700 indique qu'il s'agit d'une commande d'écriture (W) et les données utiles de la commande comportent également l'adresse @ZM10 à laquelle la commande CMDj doit être écrite dans la sous-zone ZM10 de la mémoire non volatile DM.

Le contrôleur NFC de l'interface sans contact IF2, extrait la commande CMDj de la commande RF 700 et la délivre au dispositif de mémoire DM en vue de son stockage à l'adresse @ZM10 dans la sous-zone mémoire ZM10.

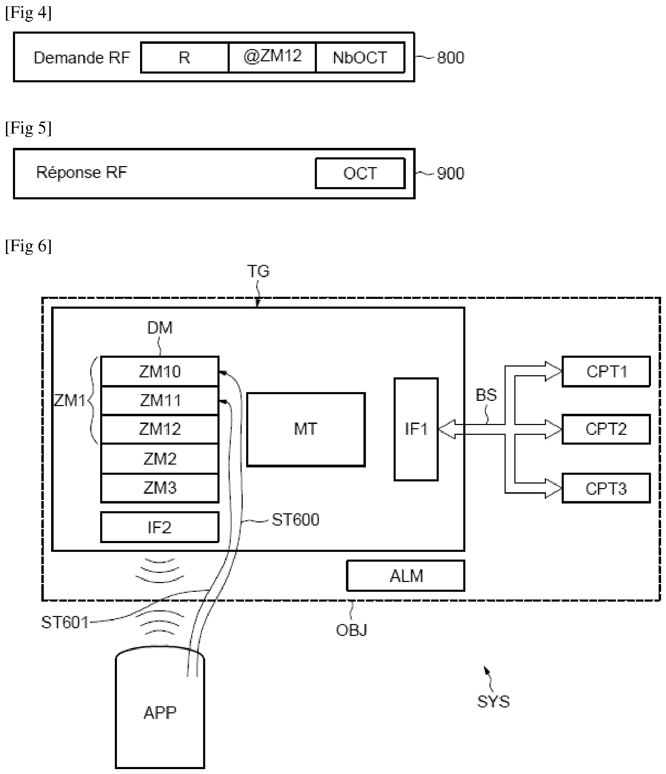

Lorsque l'appareil souhaite récupérer dans la sous-zone ZM12 des données qui ont été transmises par un ou des capteurs, il envoie une commande RF 800 (figure 4) qui est une commande de lecture (R) et qui comporte par exemple dans ses données utiles l'adresse @ZM12 du premier octet à lire ainsi que le nombre NbOCT d'octets à lire.

Le contrôleur NFC de l'interface sans contact IF2, extrait ces données utiles de la commande RF 800 et délivre au dispositif de mémoire DM la commande de lecture correspondante.

Les octets OCT sont alors lus dans la sous-zone mémoire ZM12 et le contrôleur NFC élabore une réponse RF 900 (figure 5) de structure classique et contenant les octets lus OCT dans le champ de données utiles de la réponse RF 900.

Cette réponse RF 900 peut être transmise à l'appareil APP.

On se réfère maintenant plus particulièrement aux figures 6 à 9 pour décrire le premier mode de fonctionnement du système SYS.

Sur la figure 6, l'appareil APP transmet au transpondeur selon le protocole de communication sans contact du type NFC, et via la deuxième interface IF2 les commandes CMDj en vue de leur stockage dans la sous-zone mémoire ZM10 (étape ST600).

Le cas échéant, l'appareil APP transmets également les données à écrire dans le ou les capteurs CPTi concernés (étape ST 601) en vue de leur stockage dans la première sous-zone mémoire ZM11.

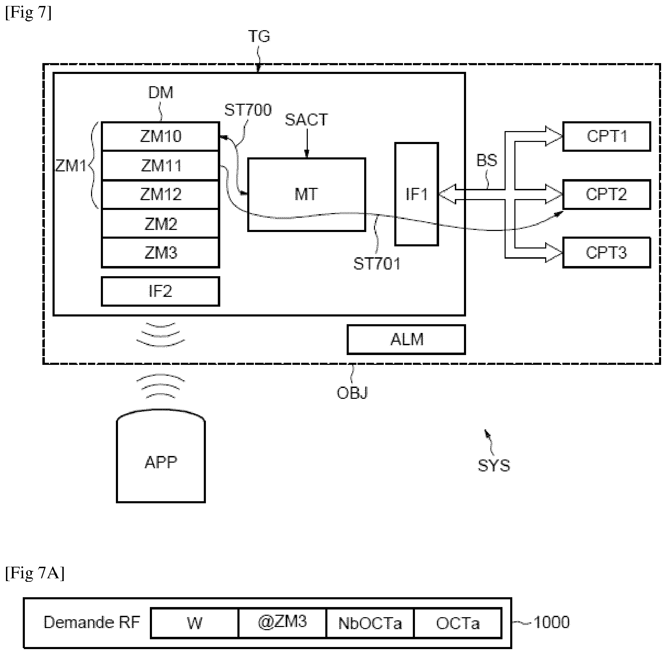

En réponse à un signal d'activation SACT (figure 7) des moyens de traitement MT du transpondeur TG, dont on reviendra plus en détails ci-après sur un exemple de structure, exécutent automatiquement et de façon autonome (étape ST700), le microprogramme comportant les commandes CMDj stockées dans la sous-zone mémoire ZM10.

A titre d'exemple non limitatif, le signal d'activation SACT peut être transmis par l'appareil au sein d'une commande RF du type de la commande RF 700 de la figure 3.

Un exemple d'une telle commande RF 1000 est illustré sur la figure 7A.

Comme indiqué ci-avant, la troisième zone mémoire ZM3 contient des informations de configuration et de statuts du transpondeur TG.

Cette commande RF 1000 est une commande d'écriture à l'adresse @ZM3 dans la troisième zone mémoire ZM3, qui correspond à un registre dit d'activation, d'octets de configuration OCTa en un nombre NbOCTa.

Lorsque cette commande RF 1000 est envoyée, le signal d'activation SACT est émis.

Si certaines commandes CMDj sont des commandes d'écriture de données dans un ou plusieurs capteurs, les moyens de traitement extraient ces données de la première sous-zone mémoire ZM11 et les délivrent au(x) capteur(s) concerné(s) via la première interface IF1, comme cela sera expliqué plus en détails ci-après.

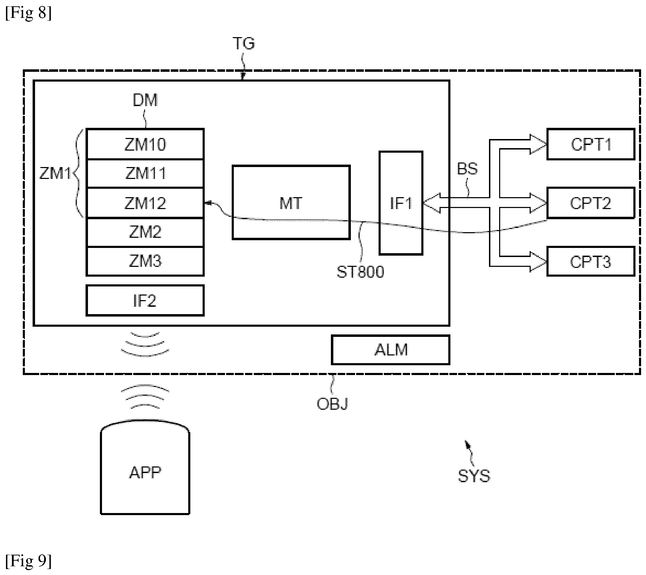

Si certaines commandes CMDj sont des commandes de lecture de données dans un ou plusieurs capteurs, les moyens de traitement reçoivent ces données du ou des capteurs concernés via la première interface IF1, comme cela sera expliqué plus en détails ci-après, et les stockent dans la deuxième sous-zone mémoire ZM12 (étape ST800, figure 8.

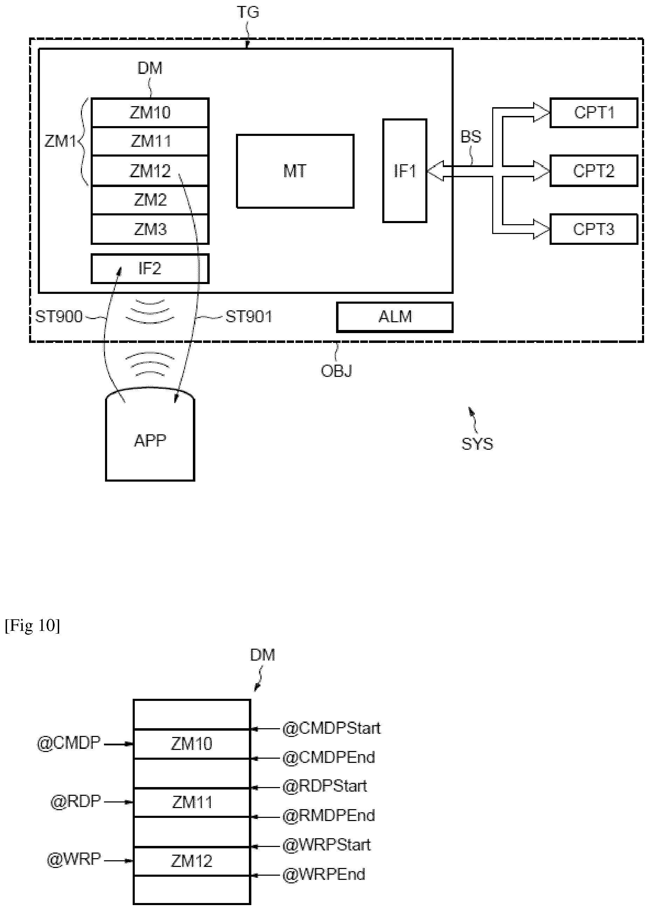

Puis comme indiqué ci-avant, lorsque l'appareil APP souhaite récupérer les données stockées dans la deuxième sous-zone mémoire ZM12 (ce qu'il peut faire à tout moment) il émet (étape ST900, figure 9) une requête RF 800 (figure 4) et reçoit (étape ST901) la réponse RF 900 (figure 5).

On se réfère maintenant plus particulièrement aux figures 10 à 12 pour illustrer un exemple de fonctionnement des moyens de traitement MT.

Ces moyens de traitement comprennent ici une machine d'états ou automate, formés par exemple par des circuits logiques.

Les moyens de traitement MT utilisent ici
- un pointeur CMDP pointant sur la sous-zone ZM10 à l'adresse courante @CMDP (figure 10),
- un pointeur de lecture RDP pointant sur la sous-zone ZM11 à l'adresse courante @RDP et
- un pointeur d'écriture WRP pointant sur la sous-zone ZM12 à l'adresse courante @WRP.

Comme illustré sur la figure 10, le pointeur CDMP pointe entre les adresses @CDMPStart et @CDMPEnd de la mémoire DM délimitant ainsi la plage d'adresses de la sous-zone ZM10.

Le pointeur RDP pointe entre les adresses @RDPStart et @RDPEnd de la mémoire DM délimitant ainsi la plage d'adresses de la sous-zone ZM11.

Le pointeur WRP pointe entre les adresses @WRPStart et @WRPEnd de la mémoire DM délimitant ainsi la plage d'adresses de la sous-zone ZM12.

D'une façon générale, en réponse au signal d'activation SACT, la machine d'état MT du transpondeur exécute de façon autonome le microprogramme formé par les commandes CMDj stockées dans la mémoire non volatile et les transforme en commandes (dites commandes module CMDM) de lecture ou d'écriture de données dans le ou les capteur(s).

Ces commandes module CMDM sont délivrées à l'interface série IF1 qui les transforme en commandes finales module compatibles avec le protocole série utilisé, ici le protocole I²C.

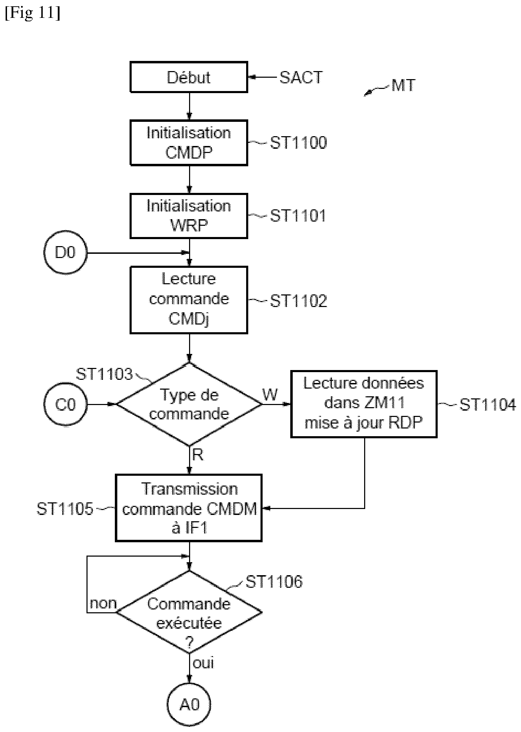

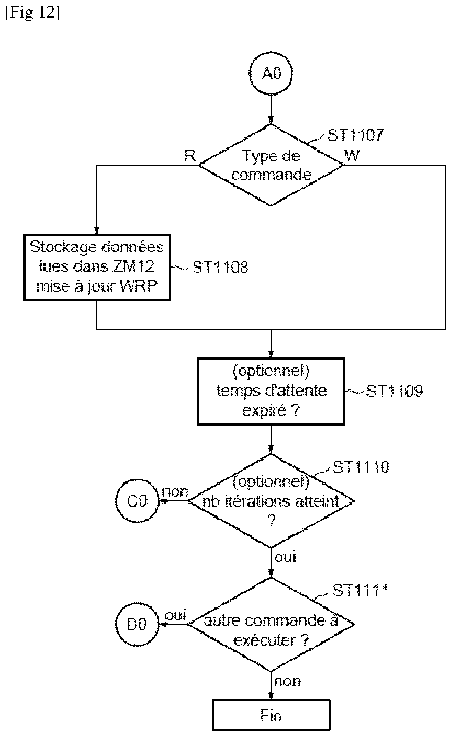

Ainsi, plus précisément et comme illustré sur les figures 11 et 12, en réponse au signal d'activation SACT, les moyens de traitement MT initialisent les pointeurs CMDP et WRP (étapes ST100 et ST1101).

Puis dans l'étape ST1102, la commande courante CMDj pointée par le pointeur CMDP est lue.

Si dans l'étape ST1103, la commande CMDj est une commande d'écriture (W) de données dans un ou plusieurs capteurs, alors les moyens de traitement MT lisent (étape ST1104) les données à écrire dans la sous-zone mémoire ZM11 aux adresses désignées par le pointeur RDP puis mettent à jour ce pointeur.

La prochaine étape est l'étape ST1105 qui est directement atteint si dans l'étape ST1103, la commande CMDj est une commande de lecture (R) de données dans un ou des capteurs.

Dans l'étape ST1105, la commande module CMDM est élaborée et transmise à l'interface IF1.

Cette commande module CMDM comporte notamment l'adresse du capteur concerné sur le bus BS, le sens R/W (lecture/écriture), le nombre d'octets à lire ou à écrire.

Mais cette commande CMDM ne comporte pas les éventuels bits de contrôle propres au protocole série utilisé sur le bus BS.

Ces bits de contrôle sont rajoutés par le contrôleur série de l'interface IF1 pour former la commande finale module.

Dans l'étape ST1106, on vérifie si la commande est exécutée.

Si tel est le cas on passe dans l'étape ST1107.

Si dans cette étape la commande exécutée était une commande de lecture (R), alors les moyens de traitement MT effectuent l'étape ST1108 dans laquelle ils stockent les données lues provenant du ou des capteurs concernés dans la sous-zone ZM12 aux adresses désignées par le pointeur WRP, puis mettent à jour le pointeur WRP.

Puis dans le cas où les étapes optionnelles ST1109 et ST1110, ne sont pas mises en oeuvre, on passe à l'étape ST1111.

Si dans l'étape ST1107 la commande exécutée était une commande d'écriture (W), alors les moyens de traitement MT passent directement à l'étape ST1111 dans le cas où les étapes optionnelles ST1109 et ST1110, ne sont pas mises en oeuvre.

Dans l'étape ST1111, si toutes les commandes CMDj ont été exécutées, les moyens de traitement MT ont terminé leurs opérations.

Dans le cas contraire on revient au point D0 de l'organigramme pour l'exécution de la commande CDMj suivante.

Dans certaines applications, un temps d'attente peut être nécessaire après l'exécution d'une commande CMDj. Ceci peut être indiqué dans le champ FLD5 (figure 2) de la commande CMDj.

Dans ce cas les moyens de traitement MT restent dans l'étape ST1109 tant que ce temps d'attente n'est pas expiré. Bien entendu, dans ce cas un compteur cadencé par un signal d'horloge peut être incorporé dans les moyens de traitement MT.

Il peut parfois être requis que l'exécution d'une commande CMDj soit réitérée pendant un nombre choisi d'itérations. Ce nombre peut là encore être indiqué dans le champ FLD5 de la commande.

Et tant que le nombre d'itérations n'est pas atteint, on revient au point C0 de l'organigramme.

On va maintenant décrire plus en détails un exemple de structure de l'interface série, adaptée au protocole série I²C.

Le protocole I²C est bien connu de l'homme de l'art et peut être trouvé dans la spécification I²C. On en rappelle quelques caractéristiques du protocole I²C.

Le bus I²C utilise deux fils : données série (SDA) et horloge série (SCL).

Tous les dispositifs maîtres et esclaves I²C sont reliés seulement avec ces deux fils.

Un dispositif fonctionnant en tant que maître génère une horloge de bus et initie la communication sur le bus, les autres dispositifs sont esclaves et répondent aux commandes sur le bus.

Pour pouvoir communiquer avec un dispositif spécifique, chaque dispositif esclave doit avoir une adresse qui est unique sur le bus.

Le dispositif maître I²C n'a pas besoin d'adresse car aucun autre dispositif (esclave) n'envoie de commandes au maître.

Les deux signaux SCL et SDA sont bidirectionnels.

A chaque impulsion d'horloge, un bit de données est transféré. Le signal SDA ne peut changer que lorsque le signal SCL est au niveau bas. Quand l'horloge est au niveau haut, les données sont en principe stables.

Chaque commande I²C initiée par le dispositif maître commence par une condition START (début) et finit par une condition STOP (fin). Pour ces deux conditions, SCL doit être au niveau haut. Une transition haut-bas de SDA est considérée comme une condition START et une transition bas-haut est considérée comme une condition STOP.

Après la condition START, le bus est considéré comme étant occupé. Après la condition START, le maître peut générer une condition START répétée. Celle-ci est équivalente à une condition START normale et est généralement suivie de l'adresse I²C esclave.

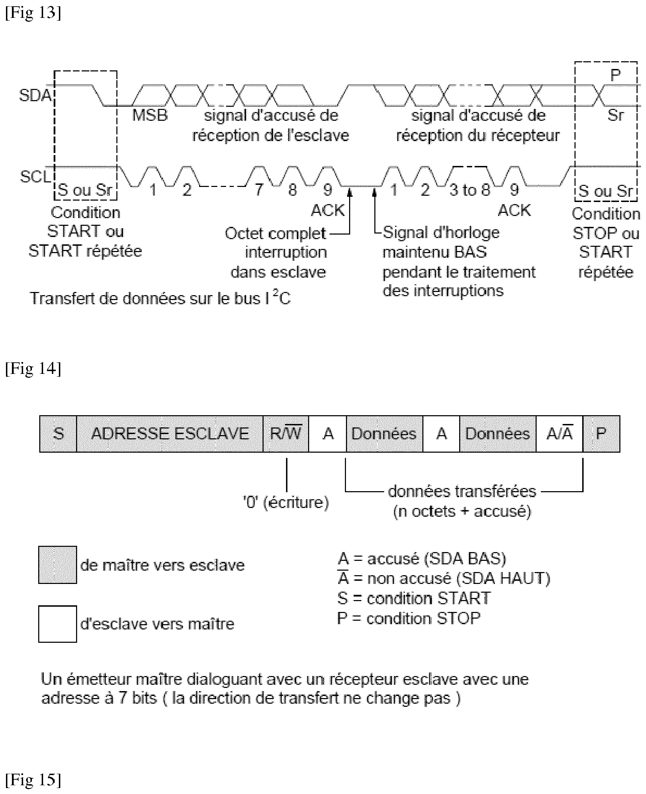

Les figures 13, 14 et 15 (tirées de la spécification I²C version 6.0, 4 avril 2014) illustrent les caractéristiques du protocole I²C.

Comme illustré sur la figure 13, les données présentes sur le bus I²C sont transférées par paquets de 8 bits (octets). Il n'y a pas de limitation du nombre d'octets, cependant chaque octet doit être suivi d'un bit d'accusé de réception ACK provenant d'un dispositif esclave. Ce bit ACK indique si le dispositif esclave est prêt à passer à l'octet suivant. Pour tous les bits de données et le bit d'accusé de réception ACK, le maître doit générer des impulsions d'horloge. Si le dispositif esclave n'accuse pas réception du transfert, cela signifie qu'il n'y a plus de données ou que le dispositif n'est pas encore prêt pour le transfert. Le dispositif maître doit générer soit une condition STOP, soit une condition START répétée.

Les données sont transmises avec le bit de poids fort (MSB) en premier. Si un esclave ne peut pas recevoir ou transmettre un autre octet complet de données jusqu'à ce qu'il ait exécuté une autre fonction, par exemple traiter une interruption interne, il peut maintenir la ligne d'horloge SCL au niveau bas pour obliger le maître à se mettre dans un état d'attente. Le transfert de données continue ensuite quand l'esclave est prêt pour un autre octet de données et libère la ligne d'horloge SCL.

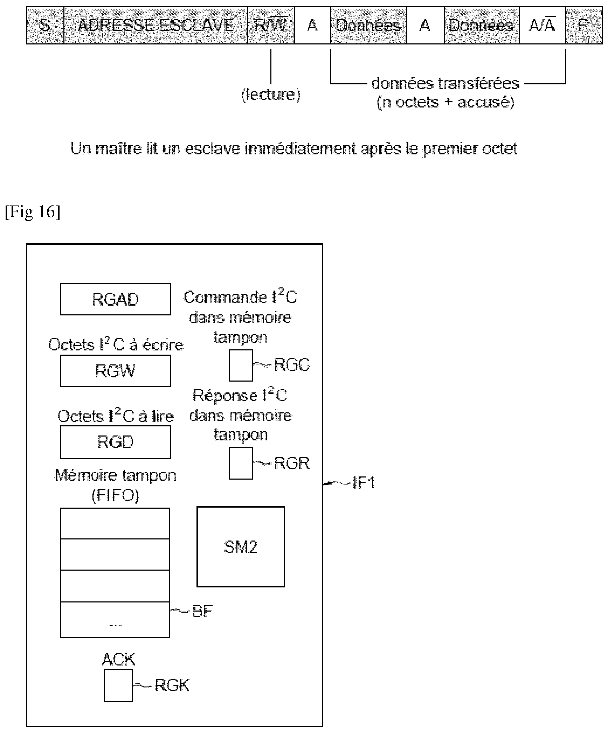

Comme représenté sur les figures 14 et 15, chaque dispositif esclave sur le bus doit avoir une adresse unique à 7 bits.

La communication commence avec la condition START, suivie de l'adresse d'esclave à 7 bits et du bit de direction de données R/W.

Si ce bit R/W est à 0 (figure 14), alors le maître écrit vers le dispositif esclave. Sinon, si le bit de direction de données R/W est à 1, le maître lit à partir du dispositif esclave (figure 15).

Une fois l'adresse d'esclave et le bit de direction de données R/W envoyés, le maître peut continuer à lire ou écrire.

La communication s'arrête avec la condition STOP qui signale également que le bus I²C est libre.

Si le maître a besoin de communiquer avec d'autres esclaves, il peut générer une condition START répétée avec une autre adresse d'esclave sans générer de condition STOP.

Si le maître n'écrit que vers le dispositif esclave, alors la direction de transfert de données ne change pas (figure 14) ; le récepteur esclave accuse réception de chaque octet.

Si le maître n'a besoin que de lire à partir du dispositif esclave, alors il envoie simplement l'adresse I²C avec le bit R/W réglé sur lecture. Ensuite, le dispositif maître commence à lire les données (figure 15).

Au moment du premier accusé de réception, l'émetteur maître devient récepteur maître et le récepteur esclave devient émetteur esclave. Ce premier accusé A est toujours généré par l'esclave. Le maître génère les accusés de réception suivants. La condition STOP est générée par le maître, qui envoie un non-accusé juste avant la condition STOP.

Dans l'exemple d'interface IF1 décrit ici en référence à la figure 16, le contrôleur série SM2 est le dispositif maître et les capteurs CPTi sont les esclaves.

L'interface IF1 intègre:
un moyen formant mémoire volatile, par exemple une mémoire tampon BF (FIFO), pour stocker des octets I²C,
une pluralité de registres, par exemple :
   un registre RGAD pour stocker l'adresse du capteur concerné par la commande,
   un registre RGW pour stocker le nombre d'octets I²C à écrire,
   un registre RGD pour stocker le nombre d'octets I²C à lire,
   un registre RGC (contenant un bit) pour signaler qu'une commande I²C est présente dans la mémoire tampon BF,
   un registre RGR (contenant un bit) pour signaler qu'une réponse I²C est présente dans la mémoire tampon BF,
   un registre RGK (contenant un bit) pour enregistrer une valeur de bit d'accusé de réception (ce registre RGK est réinitialisé à la lecture),
   le contrôleur série SM2 qui va élaborer les commandes finales modules CMDM contenant les conditions START et STOP et recevoir les réponses I²C provenant du capteur.

Les registres RGD, RGW, RGC, RGR, RGK contiennent des données (un ou plusieurs bits) de configuration qui permettent par exemple de déterminer la présence ou l'absence d'une opération à exécuter, le type d'opération (opération d'écriture ou de lecture) ou le statut de l'opération (terminée, par exemple) ou le résultat de l'opération (réussie, par exemple).

Ces registres de commande sont lus et/ou écrits
- par les moyens de traitement MT, ou
- par le contrôleur série SM2.

Plus précisément, les registres RGD, RGW et RGC sont écrits par les moyens de traitement MT.

Par exemple, si le registre RGC contient la valeur 0, cela signifie qu'il n'y a pas de commande I²C à exécuter par le contrôleur SM2.

Si le registre RGC contient la valeur 1, cela signifie qu'il y a une commande I²C à exécuter par le contrôleur SM2, cette commande étant soit une opération d'écriture, soit une opération de lecture.

Le type d'opération (lecture ou écriture) est déterminé par le contenu des registres RGD et RGW.

Plus précisément, si par exemple la valeur contenue dans le registre RGD est nulle et que la valeur contenue dans le registre RGW est non nulle, l'opération demandée par le lecteur est une opération d'écriture.

Si la valeur contenue dans le registre RGW est nulle et que la valeur contenue dans le registre RGD est non nulle, l'opération demandée par le lecteur est une opération de lecture.

Le registre RGW et le registre RGD sont aussi lus par le contrôleur SM2 afin de connaître le nombre d'octets à écrire ou lire dans le module esclave désigné.

Le registre RGC est aussi lu par le contrôleur SM2 pour savoir si une commande doit être exécutée sur le bus et est aussi écrit par le contrôleur SM2 quand l'exécution de la commande a commencé.

Le registre RGC est aussi lu par les moyens de traitement MT pour savoir si l'exécution d'une commande demandée est terminée.

Le registre RGR est écrit par le contrôleur SM2 pour indiquer que les octets lus sont stockés dans la mémoire tampon BF, et le registre RGR est aussi lu par les moyens de traitement pour vérifier si l'opération de lecture I²C est terminée.

Le registre RGK (initialement réglé par exemple à 1) est écrit par le contrôleur SM2 après réception de bits d'accusés de réception, lu par les moyens de traitement MT pour vérifier si l'opération de lecture ou d'écriture est réussie, et réinitialisé à 1 par les moyens de traitement MT.

Parmi ces données de configuration, les données contenues dans les registres RGD et RGW sont des données définissant si une commande est une opération d'écriture ou une opération de lecture dans le module esclave désigné.

La donnée contenue dans le registre RGC est une donnée qui définit la présence ou l'absence d'une opération à exécuter sur le bus.

La donnée contenue dans le registre RGC est aussi une donnée qui indique si l'exécution d'une opération d'écriture est terminée et la donnée contenue dans le registre RGR est une donnée indiquant si l'exécution d'une opération de lecture est terminée.

La donnée contenue dans le registre RGK est une donnée qui indique si une opération de lecture ou d'écriture a réussi.

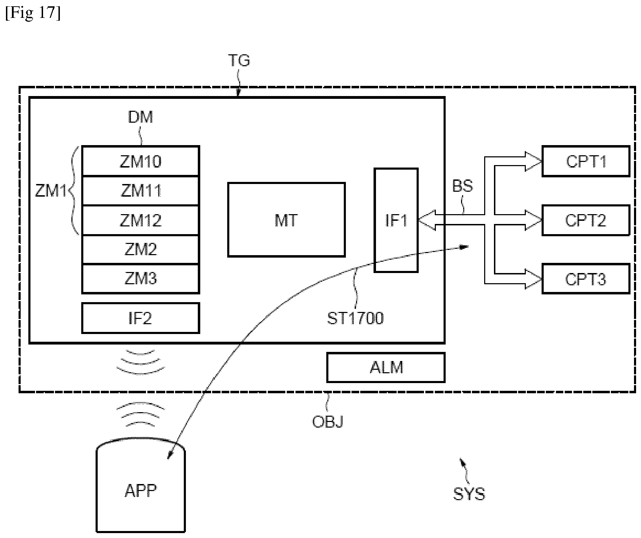

Comme illustré schématiquement sur la figure 17, le système peut posséder un deuxième mode de fonctionnement dans lequel l'appareil et le transpondeur sont configurés pour permettre une communication directe ST1700 entre l'appareil APP et au moins un module CPTi via une communication directe entre la première interface IF1 et la deuxième interface IF2 du transpondeur TG.

En d'autres termes, dans ce second mode de fonctionnement, le transpondeur se comporte comme un simple passage (ou passerelle) entre le lecteur APP et le capteur.

Un exemple de fonctionnement d'un transpondeur en tant que passerelle a été décrit dans la demande PCT déposée le 14 mai 2020 sous le n° PCT/EP2020/063427.

L'homme du métier peut se référer à cette demande PCT.

Dans cette demande PCT l'appareil et l'interface IF1 sont maîtres sur le bus BS

Les deux modes de fonctionnement peuvent être sélectionnés par exemple par un signal de sélection émis par l'appareil.

Là encore ce signal de sélection peut être émis lors de la réception d'une commande RF du type de celle illustrée sur la figure 7A, désignant à une adresse de la troisième zone mémoire ZM3 un registre dit de sélection.

Le transpondeur, avec ces deux modes de fonctionnement possibles, devient alors compatible avec des applications dans lesquelles il est préférable d'opter pour le deuxième mode de fonctionnement, au moins temporairement.

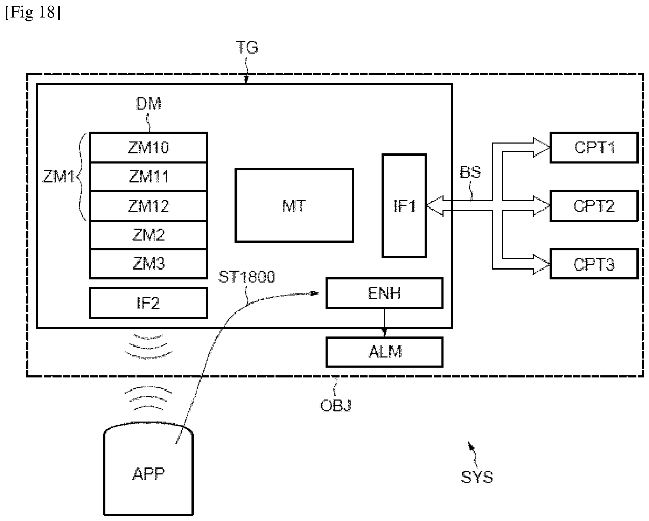

Le moyen d'alimentation ALM peut, comme illustré schématiquement sur la figure 18, être rechargeable et le transpondeur peut comporter alors des moyens de récupération d'énergie (« energy harvesting ») ENH, de structure classique et connue en soi, activables par l'appareil (étape ST1800) et configurés pour recharger le moyen d'alimentation rechargeable.

## Revendications

1. Système comprenant un transpondeur sans contact (TG) comportant un dispositif de mémoire non volatile (DM), un moyen d'alimentation autonome (ALM) configuré pour alimenter le transpondeur, un appareil (APP) externe au transpondeur et au moins un module (CPTi) externe au transpondeur et couplé au transpondeur, le système possédant un premier mode de fonctionnement dans lequel
- l'appareil (APP) est configuré pour transmettre au transpondeur selon un protocole de communication sans contact, des informations de commandes module associées audit au moins un module et des informations de données module relatives à des données à écrire ou à lire dans ledit module,
- le transpondeur (TG) est configuré pour stocker ces informations de commande module et ces informations de données module dans une première zone (ZM1) du dispositif de mémoire non volatile (DM) et pour en réponse à un signal d'activation (SACT), communiquer de façon autonome selon un premier protocole de communication avec ledit au moins un module (CPTi) en utilisant ces informations de commandes module et ces informations de données module.

2. Système selon la revendication 1, dans lequel l'appareil (APP) est configuré pour délivrer au transpondeur des données à écrire dans ledit au moins un module en utilisant le protocole de communication sans contact, le transpondeur est configuré pour stocker ces données dans une première sous-zone (ZM11) de la première zone mémoire du dispositif de mémoire non volatile et les informations de commandes module comportent des informations de commandes d'écriture de ces données dans ledit au moins un module.

3. Système selon la revendication 1 ou 2, dans lequel les informations de commandes module comportent des informations de commandes de lecture de données dans ledit au moins un module, et le transpondeur est configuré pour stocker les données lues dans une deuxième sous-zone (ZM12) de la première zone du dispositif de mémoire non volatile, et pour communiquer ces données lues à l'appareil externe en utilisant le protocole de communication sans contact.

4. Système selon l'une des revendications précédentes, dans lequel ledit au moins un module est couplé au transpondeur par un bus (BS) supportant le premier protocole de communication qui est un protocole de communication série.

5. Système selon l'une des revendications précédentes, dans lequel le transpondeur est configuré pour communiquer avec plusieurs modules (CPTi) qui lui sont couplés et chaque information de commande module associée à un module comporte un identifiant (@CPTi) de ce module.

6. Système selon l'une des revendications précédentes, dans lequel
- le transpondeur comprend une première interface (IF1) configurée pour communiquer avec ledit au moins un module selon le premier protocole de communication,
- une deuxième interface (IF2) configurée pour communiquer avec l'appareil externe selon le protocole de communication sans contact,
- l'appareil est configuré pour délivrer à la deuxième interface des commandes initiales conformes au protocole de communication sans contact et contenant lesdites informations de commandes module et lesdites informations de données module,
- la deuxième interface du transpondeur est configurée pour extraire lesdites informations de commandes module et lesdites informations de données module des commandes initiales et les délivrer au dispositif de mémoire en vue de leur stockage, et
- le transpondeur comprend des moyens de traitement (MT) configurés pour, de façon autonome et en réponse au signal d'activation, extraire lesdites informations de commande module et lesdites informations de données module du dispositif de mémoire et former pour chaque module, une commande module (CMDj) et la délivrer à la première interface, la première interface étant configurée pour élaborer à partir de la commande module, une commande finale module (CMDM) conforme au premier protocole de communication et pour la délivrer audit module.

7. Système selon l'une des revendications précédentes, possédant un deuxième mode de fonctionnement dans lequel l'appareil (APP) et le transpondeur (TG) sont configurés pour permettre une communication directe entre l'appareil et ledit au moins un module via une communication directe entre la première interface et la deuxième interface du transpondeur.

8. Système selon l'une des revendications précédentes, dans lequel l'appareil est configuré pour délivrer le signal d'activation (SACT) au transpondeur.

9. Système selon l'une des revendications précédentes, dans lequel le moyen d'alimentation (ALM) est rechargeable et le transpondeur comporte des moyens de récupération d'énergie (ENH) activables par l'appareil et configurés pour recharger le moyen d'alimentation rechargeable.

10. Système selon l'une des revendications précédentes, dans lequel ledit au moins un module comprend au moins un capteur (CPTi).

11. Système selon l'une des revendications précédentes, dans lequel l'appareil (APP) comprend un lecteur sans contact.

12. Système selon l'une des revendications précédentes, comprenant un objet (OBJ) incorporant le transpondeur, le moyen d'alimentation autonome (ALM), et éventuellement au moins un module (CPTi).

13. Transpondeur sans contact appartenant au système selon l'une des revendications 1 à 12.

14. Procédé de communication entre un transpondeur sans contact (TG), un appareil (APP) externe au transpondeur et au moins un module (CPTi) externe au transpondeur et couplé au transpondeur, comprenant un premier mode de fonctionnement dans lequel
- l'appareil transmet au transpondeur selon un protocole de communication sans contact, des informations de commandes module associées audit au moins un module et des informations de données module relatives à des données à écrire ou à lire dans ledit module,
- le transpondeur stocke ces informations de commande module et ces informations de données module dans une première zone d'un dispositif de mémoire non volatile et en réponse à un signal d'activation, communique de façon autonome selon un premier protocole de communication avec ledit au moins un module en utilisant ces informations de commandes module et ces informations de données module.

15. Procédé selon la revendication 14, dans lequel l'appareil délivre au transpondeur des données à écrire dans ledit au moins un module en utilisant le protocole de communication sans contact, le transpondeur stocke ces données dans une première sous-zone (ZM11) de la première zone mémoire du dispositif de mémoire non volatile et les informations de commandes module comportent des informations de commandes d'écriture de ces données dans ledit au moins un module.

16. Procédé selon la revendication 14 ou 15, dans lequel les informations de commandes module comportent des informations de commandes de lecture de données dans ledit au moins un module, et le transpondeur stocke les données lues dans une deuxième sous-zone (ZM12) de la première zone du dispositif de mémoire non volatile, et communique ces données lues à l'appareil externe en utilisant le protocole de communication sans contact.

17. Procédé selon l'une des revendications 14 à 16, dans lequel ledit au moins un module est couplé au transpondeur par un bus (BS) supportant le premier protocole de communication qui est un protocole de communication série.

18. Procédé selon l'une des revendications 14 à 17, dans lequel le transpondeur communique avec plusieurs modules (CPTi) qui lui sont couplés et chaque information de commande module associée à un module comporte un identifiant (@CPTi) de ce module.

19. Procédé selon l'une des revendications 14 à 18, possédant un deuxième mode de fonctionnement dans lequel l'appareil communique directement (ST1700) avec ledit au moins un module en utilisant le transpondeur comme passerelle de transfert de commandes émises par l'appareil et destinées audit au moins un module et comme passerelle de transfert de données lues dans ledit au moins un module et destinées à l'appareil.

20. Procédé selon l'une des revendications 14 à 19, dans lequel l'appareil délivre le signal d'activation (SACT) au transpondeur.

21. Procédé selon l'une des revendications 14 à 20, dans lequel l'appareil (APP) comprend un lecteur sans contact et ledit au moins un module comprend au moins un capteur.
